# EUROPÄISCHE PATENTANMELDUNG

(11) **EP 2 806 330 A2**
(43) Veröffentlichungstag der Anmeldung: **26.11.2014**
(21) Anmeldenummer: 14165966.4
(22) Anmeldetag: 25.04.2014
(51) Int. Cl.: G05F 1/67

(54) **Verfahren zum Betreiben eines Photovoltaik(PV)-Systems und PV-System**

(30) Priorität: 26.04.2013 DE 102013207726
(71) Anmelder: KACO new energy GmbH, 74172 Neckarsulm (DE)
(72) Erfinder: Schaupp, Thomas, 74821 Mosbach (DE); Phlippen, Frank, 34346 Hann. Münden (DE); Wiedmann, Michael, 69254 Malsch (DE)
(74) Vertreter: Patentanwälte Ruff, Wilhelm, Beier, Dauster & Partner

(57) **Zusammenfassung**

Ein Verfahren dient zum Betreiben eines Photovoltaik(PV)-Systems (100, 200). Das PV-System (100) weist auf: einen ersten PV-Generator (1) und einen zugehörigen ersten Maximum Power Point(MPP)-Tracker (4) und eine Anzahl n von weiteren PV-Generatoren (2, 3) mit jeweils zugehörigen MPP-Trackern (5, 6), mit n ≥ 1. Das Verfahren weist die Schritte auf: fortlaufendes Bestimmen des MPP von einem der PV-Generatoren (1) und Betreiben dieses PV-Generators als Führungsgenerator in seinem bestimmten MPP und Betreiben der weiteren PV-Generatoren (2, 3) als Folgegeneratoren in Abhängigkeit von dem bestimmten MPP und in Abhängigkeit von einem Leistungsreduktionssollwert derart, dass die weiteren PV-Generatoren (2, 3) außerhalb ihres jeweiligen MPP betrieben werden.

## Beschreibung

Die Erfindung betrifft ein Verfahren zum Betreiben eines Photovoltaik(PV)-Systems und ein PV-System.

Für die Stabilität in Netzen der elektrischen Energieversorgung ist es erforderlich, dass erzeugte und abgenommene Leistung möglichst exakt übereinstimmen. Aus diesem Grund ist es notwendig, dass zumindest ein Teil der elektrischen Energieerzeuger kurzfristig dazu in der Lage ist, die Erzeugungsleistung zu steigern bzw. zu drosseln, um Fluktuationen in der Erzeugung oder im Verbrauch auszugleichen.

Im Standardbetrieb arbeiten PV-Systeme bzw. PV-Anlagen immer im Punkt der maximalen Leistung (MPP) und sind somit nicht in der Lage zum Ausgleich der Leistungsbilanz durch Vergrößern der bereitgestellten Leistung beizutragen.

Der Erfindung liegt die Aufgabe zugrunde, ein Verfahren zum Betreiben eines Photovoltaik(PV)-Systems und ein PV-System zur Verfügung zu stellen, die zur Erhöhung der Netzstabilität beitragen.

Die Erfindung löst diese Aufgabe durch ein Verfahren zum Betreiben eines Photovoltaik(PV)-Systems nach Anspruch 1 und ein PV-System nach Anspruch 6.

Das Verfahren dient zum Betreiben eines Photovoltaik(PV)-Systems bzw. einer PV-Anlage.

Das PV-System weist einen ersten PV-Generator (Solarmodul, Photovoltaikmodul, Solarzelle) und einen zugehörigen ersten Maximum Power Point(MPP)-Tracker auf. Hinsichtlich des grundsätzlichen Aufbaus und der grundsätzlichen Funktion von MPP-Trackern sei auf die einschlägige Fachliteratur verwiesen.

Das PV-System weist weiter eine Anzahl n von weiteren PV-Generatoren mit jeweils zugehörigen MPP-Trackern auf, mit n ≥ 1.

Der MPP eines einzelnen der Mehrzahl von PV-Generatoren wird fortlaufend herkömmlich bestimmt. Dieser PV-Generator wird als Führungsgenerator, insbesondere dauerhaft, an seinem bestimmten MPP betrieben und erzeugt so herkömmlich, insbesondere dauerhaft, seine maximale Leistung.

Ein jeweiliger MPP der weiteren PV-Generatoren kann basierend auf dem bestimmten MPP des Führungsgenerators berechnet werden, da sämtliche für das Berechnen der jeweiligen MPPs notwendigen Kenngrößen aus dem bestimmten MPP des Führungsgenerators ableitbar sind.

Die weiteren PV-Generatoren arbeiten als Folgegeneratoren in Abhängigkeit von dem bestimmten MPP des Führungsgenerators und weiter in Abhängigkeit von einem vorgebbaren Leistungsreduktionssollwert derart, dass die weiteren PV-Generatoren außerhalb ihres jeweils berechneten MPP betrieben werden, d.h. weniger als ihre maximale Leistung erzeugen.

Daher können die Folgegeneratoren im Bedarfsfall sehr kurzfristig zusätzlich einspeisbare Leistung zur Verfügung stellen und somit zur Erhöhung der Netzstabilität beitragen. Durch Betreiben des Führungsgenerators am MPP ist der MPP auch für die Folgegeneratoren bekannt bzw. berechenbar, so dass diese definiert unterhalb ihres jeweiligen MPP betrieben werden können.

Der Leistungsreduktionssollwert kann ein absoluter Leistungswert (in Watt) sein, ein relativer Leistungswert bezogen auf eine maximale Erzeugungsleistung (Nennleistung) des PV-Systems sein, oder ein relativer Leistungswert bezogen auf eine momentane Erzeugungsleistung des PV-Systems sein.

Der Leistungsreduktionssollwert kann in Abhängigkeit von einer Netzfrequenz und/oder durch einen Netzbetreiber eingestellt bzw. vorgegeben werden.

Das Verfahren ermöglicht es auf Abruf, beispielsweise über die Auswertung der Frequenz des Netzes bzw. des Energieversorgungssystems oder durch Ansteuerung über eine externe Kommunikationsschnittstelle, die Leistung des PV-Systems um den Wert der vorgehaltenen Leistung zu steigern.

Nach einer vorgegebenen Betriebsdauer, beispielsweise einige Stunden oder Tage, kann einer der Folgegeneratoren als neuer Führungsgenerator bestimmt werden und der bisherige Führungsgenerator kann als Folgegenerator bestimmt werden. Mit anderen Worten kann nach der vorgegebenen Betriebsdauer derjenige PV-Generator, der in seinem MPP betrieben wurde, anschließend außerhalb seines MPP betrieben werden, und einer der PV-Generatoren, die außerhalb ihres MPP betrieben wurden, kann anschließend in seinem MPP betrieben werden. Dieser Prozess kann zyklisch widerholt werden. Mit anderen Worten können die Rollen Führungs- und Folgegenerator zyklisch getauscht werden. Jeweils ein PV-Generator wird im MPP betrieben während die anderen PV-Generatoren so weit leistungsreduziert betrieben werden, dass sich die gewünschte Leistungsreduktion bzw. Vorhalteleistung ergibt. Mittels des zyklischen Tauschens ist es möglich, die unterschiedlichen Konfigurationen der PV-Generatoren zu vermessen und somit richtig zu berücksichtigen, sowie ggf. eine gleichmäßige Alterung zu ermöglichen

Das PV-System weist einen ersten PV-Generator und einen zugehörigen ersten Maximum Power Point(MPP)-Tracker und eine Anzahl n von weiteren PV-Generatoren mit jeweils zugehörigen MPP-Trackern auf, mit n ≥ 1. Es versteht sich, dass weitere herkömmliche Komponenten vorhanden sein können, beispielsweise DC/DC-Wandler, Wechselrichter, usw.

Das PV-System ist dazu ausgebildet, das oben beschriebene Verfahren auszuführen. Hierzu können die MPP-Tracker miteinander vernetzt sein. Es kann auch eine Schnittstelle zu einem übergeordneten System, beispielsweise eines Netzbetreibers, vorgesehen sein.

Die PV-Generatoren sind bezogen auf eine Sonneneinstrahlungsrichtung identisch ausgerichtet, können jedoch unterschiedliche Nennleistungen aufweisen.

Die MPP-Tracker können in einen gemeinsamen Wechselrichter oder in einen jeweils zugehörigen Wechselrichter integriert sein.

Die Erfindung wird nachfolgend unter Bezugnahme auf die Zeichnungen detailliert beschrieben. Hierbei zeigt schematisch:
Fig. 1 ein PV-System gemäß einer ersten Ausführungsform und
Fig. 2 ein PV-System gemäß einer weiteren Ausführungsform.

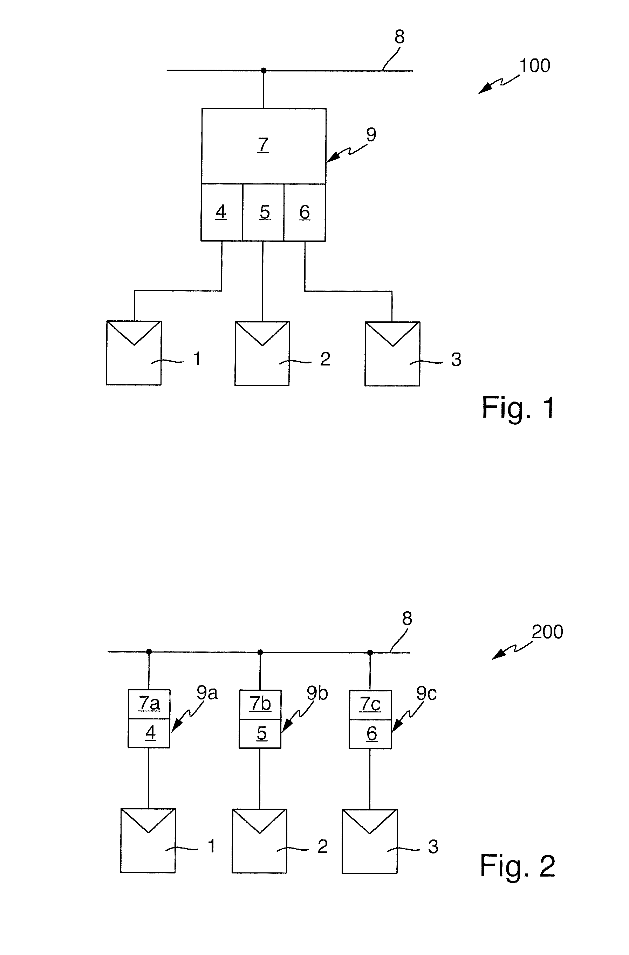

Fig. 1 zeigt ein Photovoltaik(PV)-System 100 mit einem ersten PV-Generator 1 und einem zugehörigen ersten Maximum Power Point(MPP)-Tracker 4 und exemplarisch zwei weiteren PV-Generatoren 2 und 3 mit jeweils zugehörigen MPP-Trackern 5 und 6. Die PV-Generatoren 1, 2 und 3 sind beispielsweise auf dem Dach eines Hauses identisch ausgerichtet angeordnet. Die MPP-Tracker 4, 5 und 6 und eine zugehörige Wechselrichtereinheit 7 sind in einen einzelnen Wechselrichter 9 integriert. Der Wechselrichter 9 speist die von den PV-Generatoren bereit gestellte Energie in ein Wechselspannungsnetz 8 ein.

Das System wird wie folgt betrieben.

Der MPP des ersten PV-Generators 1 wird herkömmlich fortlaufend ermittelt. Der PV-Generator 1 wird mittels geeigneter Ansteuerung seines MPP-Trackers 4 in seinem MPP betrieben. Der PV-Generator 1 bzw. dessen ermittelter MPP dient als Führungsgenerator bzw. Führungsgröße für die PV-generatoren 2 und 3 bzw. deren MPP-Trackern 5 bzw. 6.

Die PV-Generatoren 2 und 3 arbeiten als Folgegeneratoren. Ihr Arbeitspunkt (Spannung und/oder Strom) wird in Abhängigkeit von dem für den Führungsgenerator 1 bestimmten MPP und in Abhängigkeit von einem Leistungsreduktionssollwert eingestellt. Der Leistungsreduktionssollwert kann beispielsweise mittels des Wechselrichters 9 eingestellt bzw. bestimmt werden. Die Arbeitspunkte werden mittels der zugehörigen MPP-Tracker 5 bzw. 6 derart vorgegeben, dass die PV-Generatoren 2 und 3 außerhalb ihres jeweiligen MPP betrieben werden, so dass sie weniger elektrische Leistung erzeugen, als dies aufgrund einer Sonneneinstrahlungsleistung möglich wäre. Es wird folglich Leistung vorgehalten, die im Bedarfsfall praktisch verzögerungsfrei zur Verfügung gestellt werden kann, indem der Leistungsreduktionssollwert verkleinert wird, so dass die PV-Generatoren 2 und 3 dann näher an ihrem jeweiligen MPP betrieben werden.

Ein Bedarf zu höherer (oder reduzierter) Leistungsabgabe kann beispielsweise durch den Wechselrichter 9 ermittelt werden, indem dieser fortlaufend eine Frequenz des Wechselspannungsnetzes 8 überwacht und den Leistungsreduktionssollwert für die PV-Generatoren 2 und 3 bzw. deren MPP-Tracker 5 und 6 entsprechend der ermittelten Frequenz einstellt. Alternativ oder zusätzlich kann auch der Netzbetreiber in Art einer Fernsteuerung einen Leistungsreduktionssollwert oder Führungsgrößen vorgeben, aus denen der Leistungsreduktionssollwert durch den Wechselrichter 9 berechenbar ist.

Nach einer vorgegebenen Betriebsdauer kann einer der Folgegeneratoren 2 bzw. 3 als neuer Führungsgenerator bestimmt werden, wobei der bisherige Führungsgenerator 1 dann Folgegenerator ist. Dieser Vorgang kann zyklisch wiederholt werden.

Fig. 2 zeigt ein PV-System 200 gemäß einer weiteren Ausführungsform, bei dem ein jeweiliger MPP-Tracker 4, 5 und 6 zusammen mit einer zugehörigen Wechselrichtereinheit 7a, 7b bzw. 7c in mehrere Wechselrichter 9a, 8b bzw. 9c integriert sind.

Es versteht sich, dass anstelle der drei gezeigten PV-Generatoren und MPP-Tracker auch lediglich zwei oder mehr als drei PV-Generatoren und MPP-Tracker verwendet werden können.

Die Erfindung ermöglicht die Reduzierung der Ausgangsleistung bei ständiger Überwachung des MPP.

Erfindungsgemäß werden mehrere MPP-Tracker derart betrieben, dass der MPP-Tracker 4 dem MPP des PV-Generators 1 folgt, während die MPP-Tracker 5 und 6 bei einer Spannung derart abweichend von der MPP-Spannung arbeiten, dass die abgenommene Leistung um den gewünschten Wert reduziert ist.

Dabei wird die Leistung der MPP-Tracker 5 und 6 so weit reduziert, dass die Leistung des Gesamtsystems einem gewünschten Wert entspricht. Die Reduzierung kann dabei ein Leistungswert in Watt, ein relativer Leistungswert relativ zur maximalen Erzeugungsleistung des Systems oder ein relativer Leistungswert relativ zur aktuellen Erzeugungsleistung des Systems sein.

Alle PV-Generatoren des Systems haben dieselbe Ausrichtung, können aber unterschiedliche Leistungen aufweisen.

Sämtliche MPP-Tracker können in einem PV-Wechselrichter enthalten sein. Alternativ können die MPP-Tracker in einem jeweils eigenen PV-Wechselrichter enthalten sein, wobei die PV-Wechselrichter kommunikativ gekoppelt sein können.

Der Leistungsreduktionssollwert kann frei konfiguriert werden und beispielsweise über Fernsteuerung eingestellt werden. Dies in den Grenzen, dass einer der MPP-Tracker im MPP betrieben wird und die maximal mögliche Leistungsreduktion von dem Verhältnis der Leistung des MPP-Trackers mit maximaler Leistung zur Gesamtleistung bestimmt wird.

Die Rollen des Führungsgenerators und der Folgegeneratoren können zyklisch getauscht werden. Jeweils ein MPP-Tracker wird im MPP betrieben, während die anderen MPP-Tracker so weit leistungsreduziert betrieben werden, dass sich die gewünschte Vorhalteleistung einstellt. Mittels des zyklischen Tausches ist es möglich, die unterschiedlichen Konfigurationen der PV-Generatoren zu vermessen und somit richtig zu berücksichtigen, sowie gegebenenfalls eine gleichmäßige Alterung zu ermöglichen.

## Patentansprüche

1. Verfahren zum Betreiben eines Photovoltaik(PV)-Systems (100, 200), wobei das PV-System (100, 200) aufweist:
- einen ersten PV-Generator (1) und einen zugehörigen ersten Maximum Power Point(MPP)-Tracker (4) und
- eine Anzahl n von weiteren PV-Generatoren (2, 3) mit jeweils zugehörigen MPP-Trackern (5, 6), mit n ≥ 1,
wobei das Verfahren die Schritte aufweist:
- fortlaufendes Bestimmen des MPP von einem der PV-Generatoren (1) und Betreiben dieses PV-Generators als Führungsgenerator an seinem bestimmten MPP,
- fortlaufendes Berechnen eines jeweiligen MPP der weiteren PV-Generatoren (2, 3) basierend auf dem bestimmten MPP des einen der PV-Generatoren (1), und
- Betreiben der weiteren PV-Generatoren (2, 3) als Folgegeneratoren in Abhängigkeit von dem bestimmten MPP des einen der PV-Generatoren (1) und in Abhängigkeit von einem Leistungsreduktionssollwert derart, dass die weiteren PV-Generatoren (2, 3) außerhalb ihres jeweils berechneten MPP betrieben werden.

2. Verfahren nach Anspruch 1, **dadurch gekennzeichnet, dass** der Leistungsreduktionssollwert ein absoluter Leistungswert ist, oder ein relativer Leistungswert bezogen auf eine maximale Erzeugungsleistung des PV-Systems (100, 200) ist, oder ein relativer Leistungswert bezogen auf eine momentane Erzeugungsleistung des PV-Systems (100, 200) ist.

3. Verfahren nach Anspruch 1 oder 2, **dadurch gekennzeichnet, dass** der Leistungsreduktionssollwert in Abhängigkeit von einer Netzfrequenz eingestellt wird.

4. Verfahren nach Anspruch 1 oder 2, **dadurch gekennzeichnet, dass** der Leistungsreduktionssollwert durch einen Netzbetreiber eingestellt wird.

5. Verfahren nach einem der vorhergehenden Ansprüche, **dadurch gekennzeichnet, dass** nach einer vorgegebenen Betriebsdauer einer der Folgegeneratoren als neuer Führungsgenerator bestimmt wird.

6. Photovoltaik(PV)-System (100, 200), aufweisend:
- einen ersten PV-Generator (1) und einen zugehörigen ersten Maximum Power Point(MPP)-Tracker (4) und
- eine Anzahl n von weiteren PV-Generatoren (2, 3) mit jeweils zugehörigen MPP-Trackern (5, 6), mit n ≥ 1,
- wobei das System (100, 200) dazu ausgebildet ist, das Verfahren nach einem der vorhergehenden Ansprüchen auszuführen.

7. PV-System nach Anspruch 6, **dadurch gekennzeichnet, dass** die MPP-Tracker (4, 5, 6) miteinander vernetzt sind.

8. PV-System nach Anspruch 6 oder 7, **dadurch gekennzeichnet, dass** die PV-Generatoren identisch ausgerichtet sind.

9. PV-System nach einem der Ansprüche 6 bis 8, **dadurch gekennzeichnet, dass** die MPP-Tracker (4, 5, 6) in einen Wechselrichter (9; 9a, 9b, 9c) integriert sind.
